# EUROPEAN PATENT APPLICATION

(11) **EP 2 653 804 A2**
(43) Date of publication of application: **23.10.2013**
(21) Application number: 13155706.8
(22) Date of filing: 19.02.2013
(51) Int. Cl.: F24J 2/52

(54) **A support for solar panels**

(30) Priority: 06.04.2012 IT MI20120143 U
(71) Applicant: Iannuzzi Impianti S.n.c. di Iannuzzi Maurizio & C., 42028 Poviglio (Reggio Emilia) (IT)
(72) Inventor: Iannuzzi, Maurizio, I - 42028 POVIGLIO (Reggio Emilia) (IT)
(74) Representative: Lunati & Mazzoni S.r.L.

(57) **Abstract**

Support (1) for solar panels (10) defining a capture plane (10a); such support (1) comprises at least one wedge (2) made from material comprising cement, suitable for positioning a solar panel (10) on a support plane (1 a) and defining a contact surface (2a) suitable to come into contact with the support plane (1a) and an upper surface (2b), suitable for supporting the capture plane (10a) inclined in relation to the support plane (1a).

## Description

The present invention relates to a support for solar panels of the type as recited in the preamble of Claim 1.

In particular the invention relates to a support which can be used for making solar plants, and more specifically, to correctly position one or more solar panels such as, for example, a solar collector, suitable for using solar rays to heat water or another liquid, or a photovoltaic panel, suitable for using solar rays to produce electricity.

As is known, incentives currently exist to build plants able to provide clean electricity, that is to say using alternative energy sources such as, for example the sun or wind.

One of the most widespread types of plant is the solar plant, also called photovoltaic plant, which transforms solar energy into electricity and which is usually positioned on the roofs of houses or other buildings.

Such plants are usually composed of a plurality of solar panels supported, in the correct position, by a support structure able to move each photovoltaic panel in relation to the roof so as to permit said panel to move with the sun throughout the entire day.

These support structures are extremely complex to produce as a result of the presence of articulated and complicated joints and complex movement apparatuses which translate into a high purchase cost and considerable difficulty in setting up the plant.

For such reasons, in many cases plants with fixed solar panels are preferred to the above since despite being characterised by a lower output, the cost thereof is considerably lower.

Such plants with fixed solar panels usually have a support composed of a framework of profiles welded to each other and made, as the occasion arises, to adapt the dimensions of the support to those of the plant to be built.

The prior art described above has several significant drawbacks.

A first problem is the still elevated cost which makes the creation of solar plants economically challenging and thereby also limits the diffusion of plants with fixed solar panels.

This high cost derives from the fact that whenever a new photovoltaic plant is to be built, a support specific to the site in question needs to be made, different from others as regards dimensions, position, and inclination of the panels. Another problems lies in the complexity of setting up a photovoltaic plant. In particular, such problem is due to the fact that the support, on account of the elevated weight of the panels, must withstand elevated stresses and thus requires a complex and specific architecture of the profiles.

Such problem is further added to by the fact that the solar panels, when exposed to wind, create intense forces which if not properly withstood by the support, may lead to the collapse or damage thereof.

For such reason, in some cases, counter-weights suitably constrained to the support are used to counter the effect of the wind but these, on the other hand further complicate the architecture of the support and, thus further increase the cost.

Another problem, of no less importance, deriving from the aforesaid forces, is represented by the fact that the connection of the support to the roof is made by means of screws and housings and thus requires a multiplicity of holes or other works weakening the roof structure and above all creating significant problems of leaks and water tightness, making the waterproofing of the roof highly complex.

In this situation the technical purpose of the present invention is to devise a support for solar panels able to substantially overcome the drawbacks mentioned above.

Within the sphere of said technical purpose, an important purpose of the invention is to obtain a support which is particularly economical and easy to adapt to the specific requirements of the photovoltaic plant.

Another important purpose of the invention is to devise a support for solar panels which is not expensive and which thus makes it possible to produce particularly economical photovoltaic plants.

A further purpose of the invention is to obtain a support which makes it possible to install solar panels without damaging the roof structure.

The technical purpose and specified aims are achieved by a support for solar panels as claimed in the appended Claim 1.

Preferred embodiments are described in the dependent claims.

The characteristics and advantages of the invention are clearly evident from the following detailed description of a preferred embodiment thereof, with reference to the accompanying drawings, in which:
**Fig. 1** shows an exploded view of the support for solar panels according to the invention;
**Fig. 2** shows a side view of the support for solar panels;
**Fig. 3** shows three possible positions of the support; and
**Fig. 4** presents a plant made with the support for solar panels according to the invention.

With reference to said drawings, reference numeral **1** globally denotes the support for solar panels according to the invention.

Such support is suitable to be used to make solar plants **100** having fixed solar panels **10,** that is to say not moving in relation to a support plane **1a,** such as a roof or a field, and defining at least one capture plane **10a,** that is to say a surface suitable to allow solar energy to be collected and then exploited.

The expression solar panel is used to identify any solar panel/collector suitable to be used to exploit solar energy. In particular, the expression solar panel thus identifies a solar thermal panel, that is to say a panel suitable to permit the use of solar energy to heat water or other fluid, or at least a photovoltaic solar panel, suitable to convert such solar energy into electricity.

The support 1 for solar panels comprises, mainly, a wedge **2** made from material comprising cement and suitable to be positioned between the solar panels 10 and the support plane 1a so as to support the solar panels 10 in the correct position; and a catch **3** suitable to constrain at least one solar panel 10 to the wedge 2.

In particular, the wedge 2 is preferably made from concrete and more preferably from reinforce concrete.

In addition, it has a weight substantially comprised between 10 kg and 20kg, preferably 13 to 17 kg and even more preferably substantially over 15 kg.

In order to position the solar panel 10 in an optimal position, the wedge 2 defines a contact surface **2a,** suitable to come into contact with the support surface 1a, and an upper surface **2b,** on which the solar panel 10 is substantially positioned, reciprocally inclined so as to position the capture plane 10a inclined in relation to the support plane 1a. Preferably, the surfaces 2a and 2b are reciprocally inclined by an angle substantially comprised between 5° and 25°, more preferably, substantially comprised between 8° and 20° and even more preferably, substantially equal to 11°.

Consecutively to the contact surface 2a the wedge advantageously defines at least one supplementary contact surface **2c** suitable for being positioned on the support plane 1a alternatively to the aforesaid contact surface 2a.

The supplementary contact surface 2c is inclined in relation to the contact 2a and upper 2b surfaces, so that when it is rested on the plane 1a, it varies the angle of inclination of the upper surface 2c and thus, of the capture plane 10a in relation to the support plane 1a. Preferably, the supplementary contact surface 2c defines, in relation to the contact surface 2a, an angle of inclination α substantially comprised between 3° and 10° and, more preferably, substantially equal to 5°.

Advantageously, the wedge 2 defines two supplementary contact surfaces 2c reciprocally inclined by a second angle of inclination β substantially comprised between 3° and 10° and, in particular, substantially equal to 5°.

Preferably, the angles of inclination α and β are substantially equal.

In order to enable the wedge 2 to rest stably on the support surface 1a with one of the supplementary contact surfaces 2c, the support 1 comprises at least one prop **4** suitable for being positioned between the contact surface 2a and the support plane 1a so as to permit the wedge 2 to be rested stably on said support plane 1a. In particular, the support 1 consists of two lifting elements 4 alternately utilisable depending on which of the supplementary contact surfaces is to be used.

The prop 4 is composed of a prismatic element having a trapezium and preferably, a rectangular trapezium cross-section suitable to be inserted in a housing **2d,** made in the wedge 2 on the contact surface 2a, so as to connect by slotting into said wedge 2.

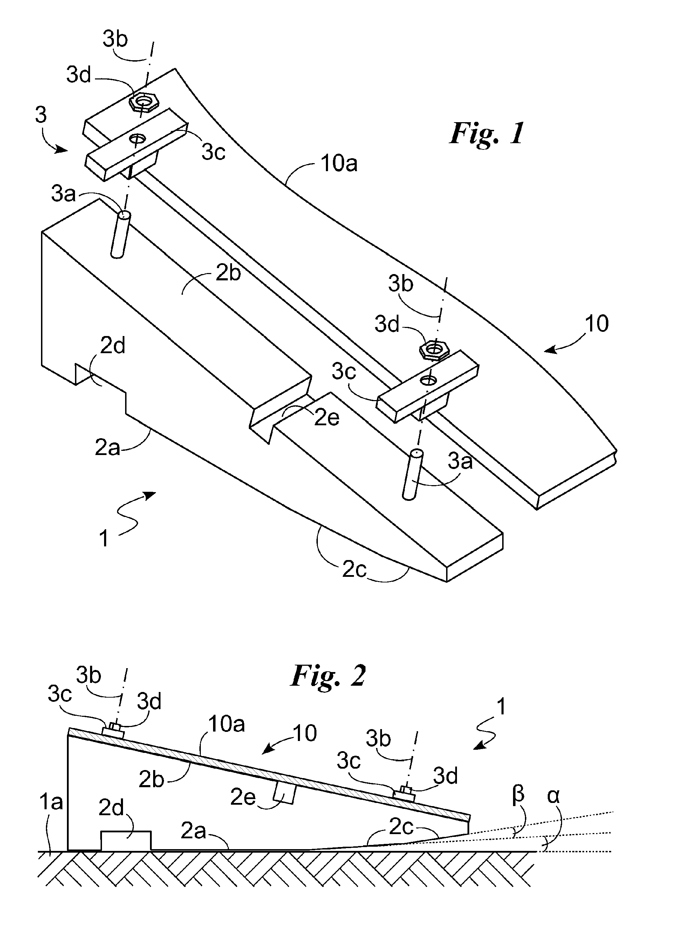

In order to constrain the solar panel 10 to the wedge 2, the support 1 has at least one catch 3 suitable for engaging with the solar panel 10 and appropriately associated to the upper surface 2b so as to position the capture plane 10a substantially parallel to the upper surface 2b. Preferably, as shown in Figures 1 and 2, the support 1 has two catches 3 positioned at the ends of the upper surface 2b.

Each catch 3 comprises a rod **3a** protruding from the upper surface 2b and defining a main direction of extension **3b** substantially perpendicular to the upper surface 2b; a coupling body **3c** engaged to the rod 3a suitable for being moved in relation to the wedge 2 along the main direction of extension 3b so as to constrain the panel to the edge 2 and in particular at least two solar panels 10 positioned substantially on opposite sides of the wedge.

Appropriately, the rod 3a is a threaded pole so as to permit a retention element **3d,** such as a nut or the like, part of the catch 3, to engage with said rod 3a and thus block the solar panel 10 between the coupling body 3c and the wedge 2, or, alternatively, between the coupling bodies 3c.

Alternatively, each catch 3 may have two coupling bodies suitable to enclose between them at least one solar panel 10.

Alternatively, each catch 3 may have two coupling bodies suitable for closing between them at least one solar panel 10 suitable for sliding along said rod 3a so as to be reciprocally moved along the main direction of extension 3b.

Lastly, the wedge 2 may have a cavity **2e** made on the upper surface 2b and, in particular, between the rods 3a, and suitable for housing the wires/cables needed for the functioning of the solar panel 10.

The functioning of a support for solar panels, described above in a structural sense, is as follows.

The operator places a plurality of wedges 2 on the support plane 1a and, depending on the requirements of the solar plant 100, selects the best inclination of the capture plane 10a, that is to say the upper surface 2b, so as to maximise the output of said plant 100.

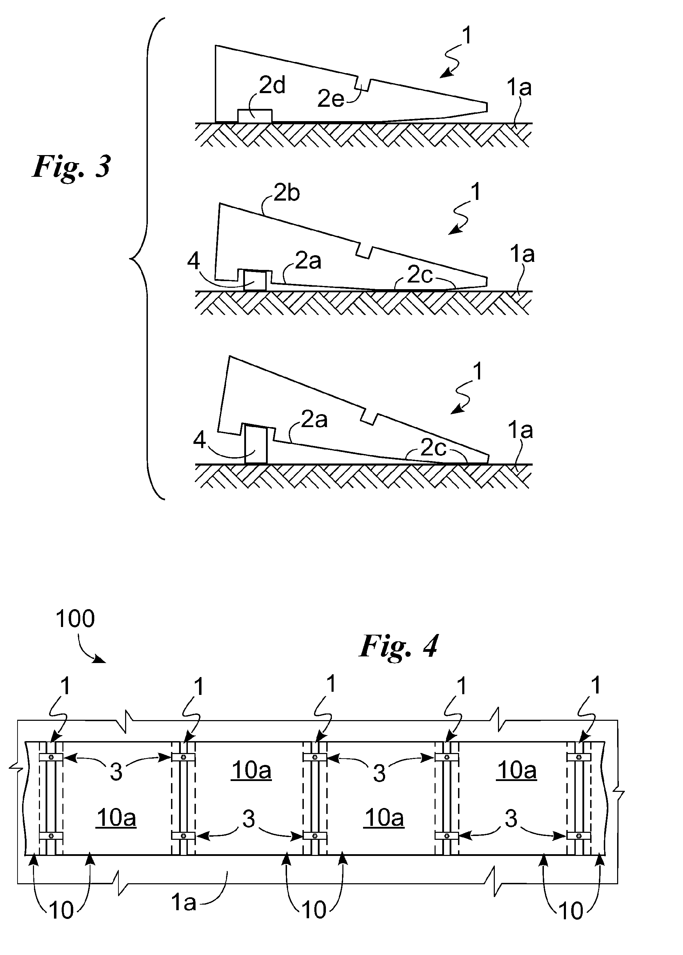

In detail, should a greater inclination of the capture plane 10a be needed than that between the upper surface 2b and contact surface 2a, the operator positions the support 2 on the support plane 1a using one of the supplementary contact surfaces 2c and then inserts a prop 4 in the housing 2d so that said prop comes into contact with the support plane 1a and then blocks the support in the desired position, as shown in Fig. 3;

Once the inclination of the upper surface 2b and thus of the capture plane 1a has been chosen, the operator rests the solar panel 10 on the wedge 2, engages the coupling body 3c to the rod 3a in such a way that the solar panel 10 is positioned between said coupling body 3c and the wedge 2.

Lastly, the operator completes the setting up of the solar plant 100 engaging the nut 3d on the threading of the rod 3a so that it clamps the coupling body 3c against the wedge 2, firmly connecting the solar panel 10 between the wedge 2 and the coupling body 3c.

The invention achieves some important advantages.

A first important advantage lies in the fact that the support 1 makes it possible to build a solar plant 100 at greatly reduced costs.

In fact, the support 1 consists of using wedges 2 which, being made from material comprising cement, have a greatly reduced cost compared to the support structures for solar panels currently used.

Another advantage lies in the long duration of the supports 1 and, in particular, of the wedges 2, which being made from concrete, and preferably from reinforced concrete, guarantee high resistance to corrosion from environmental factors.

A further advantage lies in the fact that the wedge 2, having a weight substantially greater than 10 kg and, in particular 15 kg, has such a mass as to provide adequate stability to the solar plant 100 without the need to build complex structures of profiles or to use counterweights.

A further and no less important advantage, deriving from having a wedge comprising cement, lies in the fact that by having such aforesaid weight it does not require screws to be constrained to the support plane 1a and therefore no holes or other works which weaken the roof structure and above all create significant problems to the waterproofing of the roof are required.

An important advantage consequently further permits a solar plant 100 to be set up requiring a few simple operations, and therefore particularly rapid and easy.

Another objective achieved by the present invention lies in the possibility of varying the inclination of the capture plane 10a in relation to the support plane 1a so as obtain a solar plant 100 characterised by maximum output at all times. In detail, such advantage has been obtained thanks to the supplementary contact surface 2c which, by being suitably inclined in relation to the contact surface 2a and to the upper surface 2b, make it possible to vary the inclination of the capture plane 10a in relation to the support plane 1a.

A further and no less important advantage is that the support 1, thanks to the particular shape of the wedges 2, makes it possible to minimise the forces acting on the solar plant 100 making the use of counterweights superfluous.

## Claims

1. Support (1) for solar panels (10) defining a capture plane (10a); said support (1) being **characterised in that** it comprises at least one wedge (2) suitable for positioning at least one of said solar panels (10) on a support plane (1a) and defining a contact surface (2a), suitable to come into contact with said support plane (1a) and an upper surface (2b), suitable for supporting said capture plane (10a) inclined in relation to said support plane (1a); said at least one wedge (2) is made from material comprising cement.

2. Support (1) as claimed in claim 1, wherein said at least one wedge (2) is made from concrete.

3. Support (1) as claimed in the preceding claim, wherein said at least one wedge (2) is made from reinforced concrete.

4. Support (1) as claimed in one or more of the preceding claims, wherein said wedge (2) has a weight substantially equal to 15 kg.

5. Support (1) as claimed in one or more of the preceding claims, wherein the angle between said contact surface (2a) and said upper surface (2b) is substantially comprised between 5° and 25°.

6. Support (1) as claimed in the preceding claim, wherein said angle between said contact surface (2a) and said upper surface (2b) is substantially comprised between 8° and 20°.

7. Support (1) as claimed in one or more of the preceding claims 4-6, wherein said at least one wedge (2) defines at least one supplementary contact surface (2c), suitable to come into contact with said support plane (1a), and inclined in relation to said contact surface (2a) and to said upper surface (2b), so as to vary the inclination of said capture plane (10a) in relation to said support plane (1a).

8. Support (1) as claimed in claim 7, wherein said at least one wedge (2) defines two of said at least one supplementary contact surfaces (2c) reciprocally inclined by a second angle of inclination (β).

9. Support (1) as claimed in the preceding claim, wherein said angles of inclination (α, β) are substantially equal.

10. Support (1) as claimed in one or more of the claims 5-9, comprising at least one prop (4) suitable for positioning itself between said contact surfaces (2a) and said support plane (1a) so that, when said at least one supplementary contact surface (2c) is in contact with said support plane (1a), said wedge (2) rests firmly on said support plane (1a).

11. Support (1) as claimed in one or more of the preceding claims, comprising at least one catch (3) suitable to engage said solar panel (10) and associated to said upper surface (2b).

12. Support (1) as claimed in the preceding claim, wherein said at least one catch (3) comprises a rod (3a) protruding from said upper surface (2b); at least one coupling body (3c) suitable to constrain said panel (10) to said wedge (2).

13. Support (1) as claimed in the preceding claim, wherein said rod (3a) is a threaded bar and wherein said catch (3) comprises a nut (3d) suitable to engage said rod (3a) so as to block said solar panel (10) between said coupling body (3c) to said wedge (2).

14. Support (1) as claimed in one or more of the preceding claims 12-13, wherein said main direction of extension (3b) is substantially perpendicular to said upper surface (2b)

15. Support (1) as claimed in claim 12-14, wherein said rod (3a) defines a main direction of extension (3b); and wherein said coupling body (3c) is suitable to be moved in relation to said wedge (2) along said main direction of extension (3b).
